# FASCICULE DE BREVET EUROPEEN

(11) **EP 3 448 701 B1**
(45) Date de publication et mention de la délivrance du brevet: **27.05.2020**
(21) Numéro de dépôt: 17717212.9
(22) Date de dépôt: 23.03.2017
(51) Int. Cl.: B60J 5/04

(54) **PORTE DE VEHCULE AVEC RENFORT ET VEHICULE COMPRENANT UNE TELLE PORTE**
FAHRZEUGTÜR MIT VERSTÄRKER UND FAHRZEUG MIT SOLCH EINER TÜR
VEHICLE DOOR WITH REINFORCER AND VEHICLE COMPRISING SUCH A DOOR

(30) Priorité: 28.04.2016 FR 1653819
(43) Date de publication de la demande: 06.03.2019
(73) Titulaire: PSA Automobiles SA, 78300 Poissy (FR)
(72) Inventeur: BENANE, Said, 94240 L'HAY LES ROSES (FR)
(86) Numéro de dépôt international: PCT/FR2017/050680
(87) Numéro de publication internationale: WO 2017/187037

(56) Documents cités:
- WO-A1-2015/011350
- DE-A1-102013 005 402
- DE-A1-102013 020 091
- JP-A- 2010 221 971

## Description

L'invention se situe dans le domaine des portes de véhicule automobile et concerne plus particulièrement les portes équipées de renforts internes destinés à absorber des chocs latéraux. L'invention concerne également les véhicules automobiles équipés de telles portes.

Il est connu de placer des renforts à l'intérieur des portes de véhicule afin de mieux protéger les occupants en cas de collision latérale. De tels renforts se présentent classiquement sous forme de barres rigides, généralement creuses et disposées de sorte à s'étendre selon la longueur de la porte. Il existe auprès des constructeurs un besoin constant d'amélioration des performances en termes de sécurité qui sont offertes par leurs véhicules et donc par de telles portes.

Ainsi par exemple le document KR19990083007 propose d'employer non pas des barres de section rectangulaires mais de section trapézoïdale avec pour objectif d'en accroitre la rigidité, ce qui permet, à masse constante, d'en améliorer les performances en matière d'absorption d'énergie.

Le document EP2082909 va proposer quant à lui de placer une à deux barres de renfort en biais en regard de l'assise de l'occupant du véhicule. Ces renforts vont coopérer avec des éléments tampons afin d'assurer une protection optimale dudit occupant.

De nombreux autres types de renfort et agencement de ces renforts, comme dans les documents WO 2015/011350 A1 et DE 10 2013 005402 A1, ont été proposés avec le temps. Néanmoins à la connaissance du demandeur, la conception de ces renforts répond principalement à la problématique d'absorption du choc latéral et de la protection des passagers. Or il a été constaté qu'une collision latérale pouvait également endommager une porte de véhicule au point qu'il ne soit plus possible de l'ouvrir. Ceci a été constaté notamment dans le cas de véhicules présentant des portes latérales coulissantes pouvant être commandées électriquement.

L'invention a pour objectif d'apporter une solution à au moins un des inconvénients rencontrés dans l'art antérieur. En particulier, l'invention a pour objectif de proposer des portes équipées de renfort latéraux aptes à protéger à la fois les passagers et les commandes d'ouverture de porte afin de permettre autant que possible de pouvoir continuer à ouvrir et fermer une porte après une collision latérale.

A cet effet, l'invention a pour objet une porte de véhicule automobile comprenant une commande d'ouverture de porte montée dans un boîtier, un panneau de structure de porte, un panneau extérieur et un renfort placé entre ledit panneau de structure et ledit panneau extérieur, et fixé sur les montants latéraux du panneau de structure par ses extrémités, et le renfort étant intercalé entre le boîtier de la commande d'ouverture de porte et le panneau extérieur. La porte étant remarquable en ce qu'elle comprend en outre une commande électrique disposée sur le côté latéral du panneau de structure opposé à celui présentant la commande d'ouverture de porte, une extrémité du renfort est fixée sur le panneau de structure au niveau de la commande d'ouverture de porte et l'autre extrémité du renfort est fixée sur le panneau de structure de manière ce que le renfort s'étende en partie à proximité de la commande électrique de porte.

Selon des modes particuliers de réalisation, l'invention peut comprendre l'une ou l'autre des caractéristiques suivantes, prises isolément ou selon toutes les combinaisons possibles :
- Le renfort est asymétrique par rapport à un axe le coupant transversalement, puisqu'une de ses extrémités est plus large que l'autre.
- Le renfort est asymétrique par rapport à un axe le coupant longitudinalement, en particulier au niveau de son extrémité biseautée.
- Le renfort présente un ajour disposé en regard de la commande d'ouverture de porte de sorte à la rendre accessible au travers de cet ajour, et l'ajour est dimensionné pour que ses bords périphériques se placent, ou puissent se placer, en appui contre le boitier de la commande d'ouverture de porte, de préférence en cas de choc latéral.
- Le renfort s'étend d'un bord latéral de la porte à l'autre de manière oblique de sorte à ce qu'il présente une extrémité supérieure et une extrémité inférieure.
- La porte est une porte coulissante.
- L'extrémité du renfort qui est fixée sur le panneau de structure au niveau de la commande d'ouverture de porte est l'extrémité supérieure du renfort.
- L'extrémité du renfort qui est fixée sur le panneau de structure de manière ce que le renfort s'étende à proximité de la commande électrique de porte, est l'extrémité inférieure du renfort.
- La partie du renfort s'étendant à proximité de la commande électrique de porte présente une rigidité supérieure au reste du renfort, de préférence cette rigidité est obtenue par au moins un relief présenté par cette partie.
- Au moins un relief présenté par la partie du renfort s'étendant à proximité de la commande électrique de porte est obtenu par emboutissage.
- La partie du renfort s'étendant à proximité de la commande électrique de porte présente une largeur inférieure par rapport au reste du renfort.
- Le renfort présente une partie centrale comprise entre la partie s'étendant à proximité de la commande électrique de porte et la partie placée en regard de la commande d'ouverture de porte, cette partie centrale étant apte à la déformation lorsqu'elle est soumise à un effort, de préférence la partie centrale présente des ouvertures afin de faciliter sa déformation.
- Le renfort est métallique, de préférence le renfort est en acier.

L'invention a également pour objet un véhicule comprenant au moins une porte telle que définie plus haut.

Comme on l'aura compris à la lecture de la définition qui vient d'en être donnée, l'invention consiste selon un premier aspect à proposer une porte présentant un renfort spécialement agencé pour protéger la commande d'ouverture de porte. Cette dernière, ou au moins sa poignée, reste accessible au travers dudit renfort au moyen d'un ajour ouvert dans le corps même de ce renfort. Le renfort est par ailleurs agencé pour se placer en appui contre le boîtier de la commande de porte. Du fait de cet appui constant ou obtenu lors d'une collision, il présente au niveau de a partie en regard de la commande d'ouverture de porte, une rigidité relative supérieure à la partie centrale dudit élément de renfort qui résulte en une protection efficace de la commande de porte en cas de choc latéral. Le renfort va servir de bouclier à la commande d'ouverture de porte aussi bien à sa poignée qu'à son mécanisme d'actionnement (serrure, etc.).

Selon un second aspect de l'invention, le renfort présente une structure asymétrique, préférentiellement biseautée à l'extrémité opposée à celle disposée en regard de la commande de porte. L'extrémité biseautée est préférentiellement emboutie de manière à présenter une raideur ou une rigidité mécanique supérieure à celle de la partie centrale du renfort. L'invention est remarquable en ce que cette extrémité biseautée est disposée à proximité d'un élément relativement fragile tel qu'une commande électrique d'ouverture de porte lorsque la porte est une porte coulissante munie d'un tel mécanisme pour le protéger en cas de choc latéral.

Selon un troisième aspect, le renfort comprend préférentiellement une partie centrale apte à pouvoir se déformer en cas de choc latéral de sorte à pouvoir absorber l'énergie du choc.

L'invention propose donc une porte munie d'un renfort présentant des parties de rigidité différentes permettant une déformation progressive du renfort qui permet de préserver autant que possible en fonction de la violence du choc, les parties fragiles de commande d'ouverture de porte et de commande électrique de porte.

L'invention sera bien comprise et d'autres aspects et avantages apparaîtront clairement au vu de la description qui suit, donnée à titre d'exemple en références aux planches de dessins annexées sur lesquelles :
- La figure 1 présente un véhicule automobile selon l'invention
- La figure 2 présente l'intérieur du caisson de la porte selon l'invention illustrant la disposition de l'élément de renfort.
- La figure 3 présente l'élément de renfort selon l'invention.

Dans la description qui suit, le terme « comprendre » est synonyme de « inclure » et n'est pas limitatif en ce qu'il autorise la présence d'autres éléments dans le dispositif, l'agencement ou le véhicule auquel il se rapporte. Il est entendu que le terme « comprendre » inclut les termes « consister en ».

De même, les termes « inférieur », « supérieur », « avant », « arrière », « longitudinal » et « transversal » s'entendront par rapport à l'orientation générale du véhicule. « Inférieur » désignera une proximité au sol plus importante que « supérieur » selon l'axe vertical.

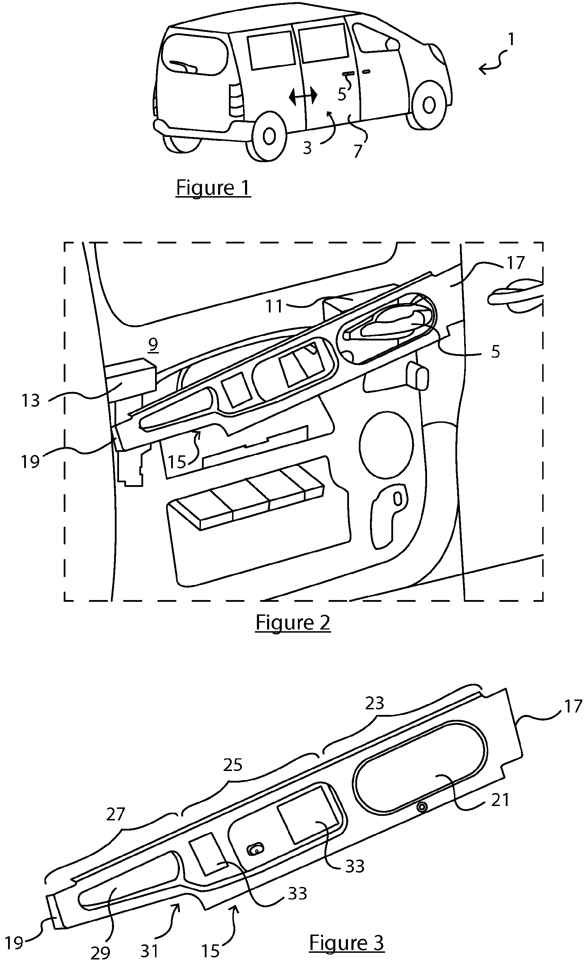

On se réfèrera en premier lieu à la figure 1 montrant un véhicule automobile selon l'invention. Le véhicule 1 comprend au moins une porte latérale 3 munie d'une commande d'ouverture de porte 5. Dans l'exemple de réalisation présenté ici la porte latérale 3 est une porte coulissante. Néanmoins, l'invention concerne également des portes de véhicule automobile non coulissantes, mais pivotantes sur charnières.

La porte 3 du véhicule comprend de manière connue un panneau extérieur 7 fixé à un panneau de structure. Le panneau de structure 9 est visible sur la figure 2 sur laquelle la porte est présentée en partie et sans son panneau extérieur. De manière connue, le panneau de structure 9 et le panneau extérieur de la porte forment un caisson destiné à recevoir différents éléments tels que le boitier 11 comprenant la commande d'ouverture de porte 5 ou encore un dispositif de commande électrique 13 de la porte. Dans notre exemple, la porte présente une fenêtre, mais l'invention peut également être appliquée aux véhicules automobiles comprenant une porte sans fenêtre.

Selon l'invention, un renfort 15 est disposé entre le panneau de structure et le panneau extérieur de la porte. Ce renfort 15 se présente sous forme d'un élément allongé fixé au niveau de ses deux extrémités (17, 19) au panneau de structure 9 de la porte, par exemple au niveau des montants latéraux du panneau de structure 9. Le renfort 15 présente une forme générale rectangulaire biseauté à une de ses extrémités comme nous le verrons en détail. L'invention est remarquable en ce que le renfort est disposé entre le boitier 11 de la commande 5 d'ouverture de porte et le panneau extérieur de la porte (non représenté sur la figure 2), en regard dudit boîtier 11, de façon à offrir une protection à ladite commande 5 d'ouverture de porte en cas de choc latéral comme nous allons le voir plus loin.

Le renfort 15 selon l'invention, va maintenant être décrit en référence à la figure 3 pour sa structure et en référence à la figure 2 concernant son agencement dans la porte.

Comme vu plus haut, le renfort 15 selon l'invention, se présente sous forme d'un élément allongé dont les deux extrémités (17, 19) sont destinées à être fixées sur le panneau de structure de la porte par exemple au niveau de ses montants latéraux. Le renfort 15 est asymétrique selon un axe le coupant transversalement en ce qu'il présente une extrémité 19 biseautée, et donc moins large que l'autre. De par son caractère asymétrique, le renfort 15 ne va pas présenter le même comportement en termes de déformation sur toute sa longueur.

Dans notre exemple de réalisation, l'extrémité la plus large 17 (non biseautée) est disposée à une hauteur supérieure à l'extrémité la moins large 19, mais l'inverse est également possible lorsque, par exemple, la porte ne comprend pas de fenêtre. Le renfort 15 va s'étendre d'un côté latéral de la porte à l'autre en présentant une disposition générale oblique, c'est-à-dire qu'il s'étend selon sa longueur en présentant un angle par rapport à l'horizontal. Selon l'invention, on peut donc distinguer une extrémité supérieure 17 et une extrémité inférieure 19. Cette disposition oblique est utile pour permettre au renfort 15 de travailler en tension lors d'un choc. Ceci va lui permettre d'être moins déformable lors d'un choc et donc de mieux en absorber l'énergie.

Selon l'invention, l'extrémité supérieure 17 du renfort 15 est celle qui est placée au niveau de la commande 5 d'ouverture de porte. De la sorte, le renfort 15 est intercalé entre le boîtier 11 de la commande 5 d'ouverture de porte et le panneau extérieur 7. L'accès à la commande 5 d'ouverture de porte reste possible par la présence d'un ajour 21 sur le renfort 15 configuré pour être en regard de ladite commande 5, et en particulier de sa poignée. Le renfort 15 et son ajour 21 sont avantageusement dimensionnés pour que le renfort 15 puisse néanmoins se placer en appui contre le boîtier 11 de la commande 5 d'ouverture de porte. En d'autres termes l'ajour 21 est dimensionné à la fois pour rendre accessible la commande 5 d'ouverture de porte (et en particulier sa poignée) afin de permettre sa manipulation depuis l'extérieur du véhicule 1, et pour que ses bords périphériques soient placés ou se placent en appui contre le boiter 11 de la commande 5 d'ouverture de porte en cas de choc latéral

Selon une mise en oeuvre préférée de l'invention, il est possible de distinguer trois parties ou zones sur la longueur du renfort 15. Une première partie ou zone supérieure 23 est la zone destinée à venir protéger la commande 5 d'ouverture de porte. La deuxième partie ou zone centrale 25 est la zone destinée à se déformer en premier en cas de choc. La troisième partie ou zone inférieure 27 est une partie rigide destinée à se placer à proximité d'un élément de la porte à protéger tel que par exemple la commande électrique 13 de porte.

Préférentiellement la troisième partie, ou zone inférieure 27, comprend l'extrémité inférieure 19 du renfort 15. Elle est avantageusement biseautée, pleine et/ou présente un embouti 29 de manière à accroître sa rigidité. Cette troisième partie est destinée à protéger des éléments fragiles tels qu'une commande électrique 13 de porte sans les toucher en cas de choc. Elle est donc disposée à leur proximité sans s'intercaler entre eux et le panneau extérieur de porte. Elle permet donc de retenir autant que possible l'enfoncement du panneau extérieur en cas de choc latéral au niveau de ces éléments et par là de les protéger.

L'homme du métier déterminera sans peine la distance optimale à laquelle il faut placer l'extrémité du renfort, préférentiellement biseautée, par rapport à l'élément qu'il protège. Selon l'invention cette distance est préférentiellement inférieure à 20 cm, de préférence inférieure à 10 cm et de préférence encore inférieure à 5 cm.

La troisième partie présente également au niveau de sa frontière avec la seconde partie un décrochement 31, la deuxième partie ou zone centrale 25 étant plus large que la troisième partie. Ce décrochement 31 va assister la zone centrale 25 lors de sa déformation en cas de choc latéral.

On aura compris que la zone centrale 25 présente une rigidité inférieure à celle des deux autres zones. A cette fin, elle présente avantageusement des ouvertures 33 pratiquées sur sa longueur.

## Revendications

1. Porte (3) de véhicule automobile comprenant une commande (5) d'ouverture de porte montée dans un boîtier (11), un panneau de structure (9) de porte, un panneau extérieur (7) et un renfort (15) placé entre ledit panneau de structure (9) et ledit panneau extérieur (7), et fixé sur les montants latéraux du panneau de structure (9) par ses extrémités (17, 19), ledit renfort (15) est étant intercalé entre le boîtier (11) de la commande (5) d'ouverture de porte et le panneau extérieur (7), ladite porte étant **caractérisé en ce que** la porte (3) est pourvue d'une commande électrique (13) disposée sur le côté latéral du panneau (9) de structure opposé à celui présentant la commande (5) d'ouverture de porte et **en ce qu'**une extrémité (17) du renfort (15) est fixée sur le panneau de structure (9) au niveau de la commande (5) d'ouverture de porte, et l'autre extrémité (19) du renfort (15) est fixée sur le panneau de structure (9) de manière ce que le renfort (15) s'étende en partie à proximité de la commande (13) électrique de porte, de préférence la porte (3) est une porte coulissante.

2. Porte (3) selon la revendication 1 **caractérisé en ce que** le renfort (15) est asymétrique par rapport à un axe le coupant transversalement.

3. Porte (3) selon l'une des revendications 1 à 2 **caractérisé en ce que** le renfort (15) présente un ajour (21) disposé en regard de la commande (5) d'ouverture de porte de sorte à la rendre accessible au travers de cet ajour (21), et **en ce que** l'ajour (21) est dimensionné pour que ses bords périphériques se placent en appui contre le boitier (11) de la commande (5) d'ouverture de porte.

4. Porte (3) selon l'une des revendications 1 à 3 **caractérisée en ce que** le renfort (15) s'étend d'un bord latéral de la porte (3) à l'autre de manière oblique de sorte à ce qu'il présente une extrémité supérieure (17) et une extrémité inférieure (19).

5. Porte (3) selon la revendication 4 **caractérisé en ce que** la partie (27) du renfort (15) s'étendant à proximité de la commande (13) électrique de porte présente une rigidité supérieure au reste du renfort (15), de préférence cette rigidité est obtenue par au moins un relief (29) présenté par cette partie (27).

6. Porte (3) selon l'une des revendications 4 ou 5, **caractérisé en ce que** la partie (27) du renfort (15) s'étendant à proximité de la commande (13) électrique de porte présente une largeur inférieure par rapport au reste du renfort (15).

7. Porte (3) selon l'une des revendications 1 à 6 **caractérisé en ce que** le renfort (15) présente une partie centrale (25) comprise entre la partie (27) s'étendant à proximité de la commande (13) électrique de porte et la partie (23) placée en regard de la commande (5) d'ouverture de porte, cette partie centrale (23) étant apte à la déformation lorsqu'elle est soumise à un effort, de préférence la partie centrale (23) présente des ouvertures (33) afin de faciliter sa déformation.

8. Porte (3) selon l'une des revendications précédentes **caractérisée en ce que** le renfort (15) est métallique, de préférence le renfort (15) est en acier.

9. Véhicule **caractérisé en ce qu'**il comprend au moins une porte selon l'une des revendications précédentes.

## Patentansprüche

1. Kraftfahrzeugtür (3), umfassend eine Türöffnungssteuerung (5), montiert in einem Gehäuse (11), eine Türstrukturtafel (9), eine Außentafel (7) und eine Verstärkung (15), platziert zwischen der Strukturtafel (9) und der Außentafel (7) und befestigt auf den Seitenstreben der Strukturtafel (9) durch ihre Enden (17, 19), wobei die Verstärkung (15) zwischen das Gehäuse (11) der Türöffnungssteuerung (5) und die Außentafel (7) eingefügt ist, wobei die Tür **dadurch gekennzeichnet ist, dass** die Tür (3) mit einer elektrischen Steuerung (13) ausgestattet ist, die auf der seitlichen Seite der Türstrukturtafel (9) gegenüber derjenigen angeordnet ist, die die Türöffnungssteuerung (5) aufweist, und dass ein Ende (17) der Verstärkung (15) auf der Strukturtafel (9) auf der Ebene der Türöffnungssteuerung (5) befestigt ist, und dass das andere Ende (19) der Verstärkung (15) auf der Strukturtafel (9) derart befestigt ist, dass die Verstärkung (15) teilweise nahe der elektrischen Türsteuerung (13) verläuft, wobei vorzugsweise die Tür (3) eine Schiebetür ist.

2. Tür (3) nach Anspruch 1, **dadurch gekennzeichnet, dass** die Verstärkung (15) achsensymmetrisch zu einer transversalen Schnittachse ist.

3. Tür (3) nach Anspruch 1 oder 2, **dadurch gekennzeichnet, dass** die Verstärkung (15) einen Ausschnitt (21) aufweist, der im Vergleich zur Türöffnungssteuerung (5) derart angeordnet ist, dass sie durch den Ausschnitt (21) hindurch zugänglich ist, und dass der Ausschnitt (21) so dimensioniert ist, dass dessen Umfangsränder anstoßend an das Gehäuse (11) der Türöffnungssteuerung (5) platziert sind.

4. Tür (3) nach einem der Ansprüche 1 bis 3, **dadurch gekennzeichnet, dass** die Verstärkung (15) von einem Seitenrand der Tür (3) zum anderen schräg verläuft, derart, dass sie ein oberes Ende (17) und ein unteres Ende (19) aufweist.

5. Tür (3) nach Anspruch 4, **dadurch gekennzeichnet, dass** der Teil (27) der Verstärkung (15), der nahe der elektrischen Türsteuerung (13) verläuft, eine Steifigkeit aufweist, die höher ist als der Rest der Verstärkung (15), wobei vorzugsweise diese Steifigkeit durch mindestens ein Relief (29) erhalten wird, das dieser Teil (27) aufweist.

6. Tür (3) nach einem der Ansprüche 4 oder 5, **dadurch gekennzeichnet, dass** der Teil (27) der Verstärkung (15), der nahe der elektrischen Türsteuerung (13) verläuft, eine Größe aufweist, die verglichen mit dem Rest der Verstärkung (15) kleiner ist.

7. Tür (3) nach einem der Ansprüche 1 bis 6, **dadurch gekennzeichnet, dass** die Verstärkung (15) einen zentralen Bereich (25) aufweist, der sich zwischen dem Teil (27), der nahe der elektrischen Türsteuerung (13) verläuft, und dem Teil (23) befindet, der gegenüber der Türöffnungssteuerung (5) platziert ist, wobei dieser zentrale Bereich (23) zur Verformung fähig ist, wenn er einer Beanspruchung unterzogen wird, wobei vorzugsweise der zentrale Bereich (23) Öffnungen (33) zum Erleichtern seiner Verformung aufweist.

8. Tür (3) nach einem der vorhergehenden Ansprüche, **dadurch gekennzeichnet, dass** die Verstärkung (15) metallisch ist, wobei vorzugsweise die Verstärkung (15) aus Stahl ist.

9. Fahrzeug, **dadurch gekennzeichnet, dass** es mindestens eine Tür nach einem der vorhergehenden Ansprüche umfasst.

## Claims

1. Door (3) of a motor vehicle comprising a door-opening control (5) mounted in a housing (11), a door structural panel (9), an exterior panel (7) and a reinforcer (15) positioned between said structural panel (9) and said exterior panel (7), and fixed to the side uprights of the structural panel (9) by its ends (17, 19), said reinforcer (15) being interposed between the housing (11) of the door-opening control (5) and the exterior panel (7), said door being **characterised in that** the door (3) is provided with an electrical control (13) arranged on the lateral side of the structural panel (9) opposite the one that has the door-opening control (5) and **in that** one end (17) of the reinforcer (15) is fixed to the structural panel (9) at the door-opening control (5), and the other end (19) of the reinforcer (15) is fixed to the structural panel (9) in such a way that the reinforcer (15) extends in part in the vicinity of the electric door control (13), preferably the door (3) is a sliding door.

2. Door (3) according to claim 1 **characterised in that** the reinforcer (15) is asymmetrical with respect to an axis that cuts it transversally.

3. Door (3) according to one of claims 1 to 2 **characterised in that** the reinforcer (15) has an opening (21) arranged facing the door-opening control (5) is such a way as to make it accessible through this opening (21), and **in that** the opening (21) is sized so that its peripheral edges are positioned bearing against the housing (11) of the door-opening control (5).

4. Door (3) according to one of claims 1 to 3 **characterised in that** the reinforcer (15) extends from a lateral edge of the door (3) to the other on a slant in such a way that it has an upper end (17) and a lower end (19).

5. Door (3) according to claim 4 **characterised in that** the portion (27) of the reinforcer (15) that extends in the vicinity of the electric door control (13) has a rigidity that is higher than the rest of the reinforcer (15), preferably this rigidity is obtained by at least one relief (29) presented by this portion (27).

6. Door (3) according to one of claims 4 or 5, **characterised in that** the portion (27) of the reinforcer (15) that extends in the vicinity of the electric door control (13) has a width that is less with respect to the rest of the reinforcer (15).

7. Door (3) according to one of claims 1 to 6 **characterised in that** the reinforcer (15) has a central portion (25) comprised between the portion (27) that extends in the vicinity of the electric door control (13) and the portion (23) positioned facing the door-opening control (5), with this central portion (23) able to be deformed when it is subjected to a force, preferably the central portion (23) has openings (33) in order to facilitate the deformation thereof.

8. Door (3) according to one of the preceding claims **characterised in that** the reinforcer (15) is made of metal, preferably the reinforcer (15) is made of metal.

9. Vehicle **characterised in that** it comprises at least one door according to one of the preceding claims.
